# DEMANDE DE BREVET EUROPEEN

(11) **EP 1 580 536 A1**
(43) Date de publication de la demande: **28.09.2005**
(21) Numéro de dépôt: 05360014.4
(22) Date de dépôt: 23.03.2005
(51) Int. Cl.: G01D 11/24

(54) **Boîtier pour un capteur**

(30) Priorité: 24.03.2004 FR 0403041
(71) Demandeur: SENSTRONIC, S.A., F-67700 Saverne (FR)
(72) Inventeur: Kesseler, Manuel, 67140 Barr (FR); Kirchdoerffer, Rémy, 1134 Vufflens le Chateau (CH)
(74) Mandataire: Nuss, Pierre

(57) **Abrégé**

La présente invention a pour objet une tête de capteur ou de détection et un dispositif comprenant une telle tête.

Tête de capteur ou de détecteur (1) principalement constituée par une enveloppe de protection formant un corps creux (2) avec une face externe dite face active (2') et par un organe sensible ou de détection monté dans ledit corps creux et adjacent à une portion de paroi frontale de l'enveloppe de protection définissant ladite face active, au niveau de la face interne opposé à cette dernière, tête de capteur caractérisée en ce que l'organe sensible (3) est disposé à distance de la face interne (4') de ladite portion de paroi (4) du corps creux (2), de manière à délimiter un espace interstitiel (5) de faible épaisseur (d) formant une interface de découplage mécanique et physique entre ladite portion de paroi (4) et ledit organe sensible (3).

## Description

La présente invention concerne le domaine des capteurs et détecteurs, notamment ceux fonctionnant sur un principe à base électromagnétique, tels que les détecteurs de présence ou de proximité.

On connaît déjà de nombreuses réalisations de tels capteurs ou détecteurs comportant en tant qu'élément ou organe sensible une inductance ou une capacité.

Cet élément sensible est généralement monté dans un boîtier protecteur, à proximité immédiate d'une portion de paroi de ce dernier, qui constitue ainsi la face active ou face de détection du capteur ou détecteur.

Pour aboutir à cette proximité immédiate, et perdre le moins possible en distance de détection efficace, l'organe sensible est généralement solidarisé directement sur la portion de paroi définissant ladite face active.

Toutefois, dans ce dernier cas, ledit organe sensible peut être affecté par les agressions ou les contraintes auxquelles est éventuellement exposée ladite portion de paroi.

Dans certaines applications, cette portion de paroi peut par exemple être soumise à des variations de pression importantes, à des variations de température notables, à des chocs, des impacts ou des vibrations ou encore à des combinaisons de ces différents phénomènes.

L'élément sensible subit alors les contraintes, les déformations et les chocs ou vibrations transmis par ladite portion de paroi et peut par conséquent être endommagé, ou en tout état de cause voir ses caractéristiques fonctionnelles modifiées sous cette influence.

Par ailleurs, pour des raisons d'étanchéité et de solidité, les boîtiers de ces capteurs ou détecteurs sont généralement réalisés d'un seul tenant sous forme de corps creux recevant l'organe sensible ou par surmoulage de matière enrobant cet organe.

Toutefois, en cas d'endommagement de l'organe sensible, il faut alors remplacer la totalité du capteur ou détecteur.

La présente invention a pour but de pallier au moins certains des inconvénients précités.

A cet effet, la présente invention a pour objet une tête de capteur ou de détecteur principalement constituée par une enveloppe de protection formant un corps creux avec une face externe dite face active et par un organe sensible ou de détection monté dans ledit corps creux et adjacent à une portion de paroi frontale de l'enveloppe de protection définissant ladite face active, au niveau de la face interne opposé à cette dernière, tête de capteur caractérisée en ce que l'organe sensible est disposé à distance de la face interne de ladite portion de paroi du corps creux, de manière à délimiter un espace interstitiel de faible épaisseur formant une interface de découplage mécanique et physique entre ladite portion de paroi et ledit organe sensible.

Ainsi, grâce à l'invention, il est fourni une interface de découplage et de compensation ou d'absorption entre la portion de paroi concernée et l'organe sensible, empêchant la transmission des contraintes ou déformations entre ces deux composantes tout en autorisant une distance minimale entre elles.

L'invention a également pour objet un dispositif capteur ou de détection formé par un boîtier principal présentant un logement ouvert vers l'extérieur et adapté pour la réception d'une tête de mesure ou de détection, dispositif caractérisé en ce que ladite tête consiste en une tête de capteur ou de détection du type précité, avec un corps creux en forme de capuchon, ladite tête étant montée, préférentiellement de manière ajustée et avec faculté de démontage, dans ledit logement avec la portion de paroi frontale affleurante par sa face externe active.

Grâce à sa construction modulaire (tête + boîtier principal), le dispositif capteur ou de détection sera plus facile à fabriquer (parties fabriquées séparément, puis assemblées) et permettra une plus grande flexibilité d'application et de fonctionnement (interchangeabilité de têtes de différents types, fonctionnant selon différents principes), tout en conservant un bon niveau de standardisation.

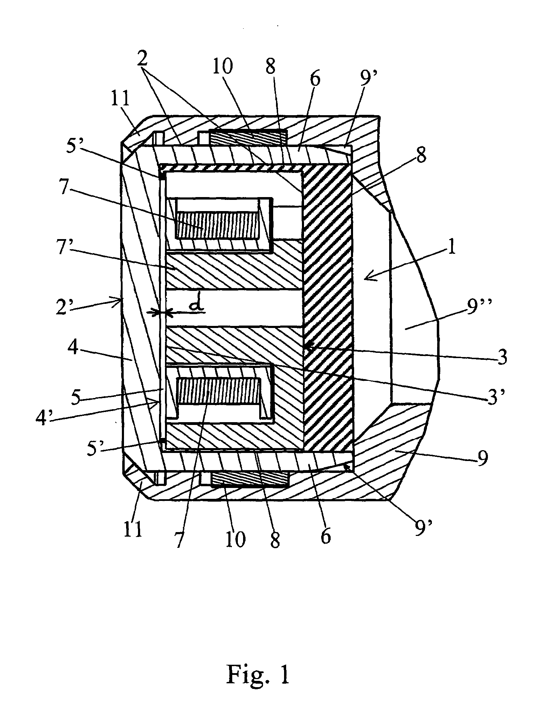

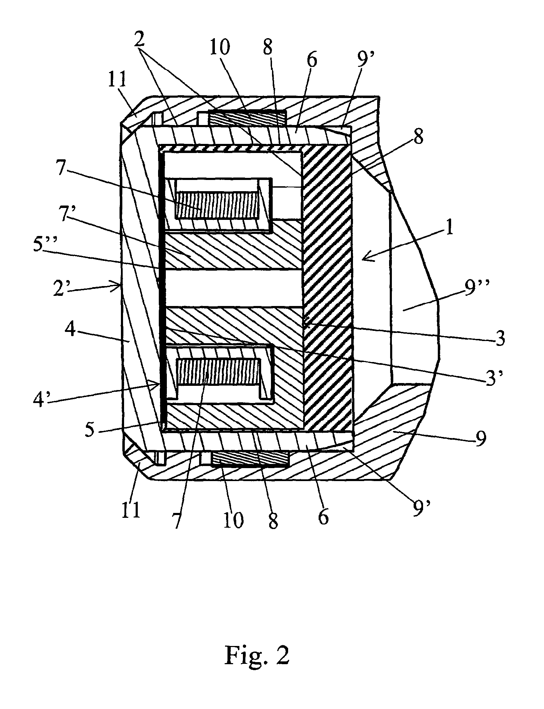

L'invention sera mieux comprise grâce à la description ci-après, qui se rapporte à un mode de réalisation préféré, donné à titre d'exemple non limitatif, et expliqué avec référence aux dessins schématiques annexés, dans lesquels les figures 1 et 2 sont des vues partielles en élévation latérale et en coupe d'un dispositif capteur et de détection comprenant une tête de capteur ou de détection selon deux modes de réalisation de l'invention.

Comme le montrent les figures annexées, la tête de capteur ou de détecteur 1 est principalement constituée par une enveloppe de protection 2 formant un corps creux avec une face externe dite face active 2' et par un organe 3 sensible ou de détection monté dans ledit corps creux 2 et adjacent à une portion de paroi frontale 4 de l'enveloppe de protection définissant ou supportant ladite face active 2', au niveau de la face interne 4' opposé à cette dernière.

Conformément à l'invention, l'organe sensible 3 est disposé à distance de la face interne 4' de ladite portion de paroi 4 du corps creux 2, de manière à délimiter un espace interstitiel 5 de faible épaisseur d formant une interface de découplage mécanique et physique entre ladite portion de paroi 4 et ledit organe sensible 3.

Comme le montre la figure 1 des dessins annexés, l'espace interstitiel 5 peut être défini par un ou des élément(s) 5' d'entretoisement ou d'écartement, formé(s) d'un seul tenant sur la face interne 4' ou sur l'organe sensible 3 ou sous forme de pièce(s) intercalaire(s) séparée(s), déterminant le positionnement à distance dudit organe sensible 3 par rapport à ladite face interne 4' de la portion de paroi 4 et préférentiellement situé(s) sur la périphérie dudit espace interstitiel.

L'élément d'écartement 5' pourra par exemple consister en une bague ou en des plots (éventuellement réunis en une pièce) formé(e)(s) par moulage sur l'une des composantes 4, 3 ou rapporté(e)(s) séparément.

De plus, l'élément d'écartement 5', s'étendant périphériquement entre 3 et 4, pourra consister en un matériau faiblement déformable et électriquement isolant, de manière à procurer une isolation électrique entre l'organe 3 et la face 4'.

Conformément à un premier mode de réalisation représenté sur la figure 1, l'espace interstitiel 5 est vide et forme une lame d'air ou d'un gaz entre la face interne 4' de la portion de paroi 4 et la face en regard de l'organe sensible 3.

Conformément à un second mode de réalisation représenté sur la figure 2, l'espace interstitiel 5 est au moins partiellement rempli d'une couche intermédiaire 5" en un matériau souple et/ou élastiquement déformable, formant couche intermédiaire de contact entre la portion de paroi 4 et la face en regard de l'organe sensible 3.

Dans ce second mode de réalisation, l'élément d'écartement 5' peut être omis.

Préférentiellement, la couche intermédiaire 5" présente des propriétés d'amortissement et/ou d'atténuation de chocs et/ou vibrations, ainsi que des propriétés d'isolation électrique, et relie la face fonctionnelle ou de référence 3' dudit organe sensible 3 à ladite face interne 4' de ladite portion de paroi 4.

Selon une première variante de réalisation, la couche intermédiaire 5" peut être composée d'une couche d'une épaisseur minimale d déterminée (avec par exemple d compris entre 0,5 et 2 mm) d'un matériau résilient, préférentiellement appliqué par enduction et à propriétés adhésives ou collantes.

Selon une seconde variante de réalisation de l'invention, la couche intermédiaire 5" est composée d'une portion d'un matériau en feuille ou en plaque, par exemple à structure alvéolaire, intimement assemblée avec la face interne 4' de la portion de paroi 4 concernée de l'enveloppe de protection 2, d'une part, et avec la face 3' concernée de l'organe sensible 3, d'autre part, par exemple par collage.

De manière alternative ou complémentaire par rapport aux deux variantes précitées, il peut être prévu que la couche intermédiaire 5" remplissant l'espace interstitiel 5 consiste en un film ou une feuille en un matériau électriquement isolant de faible épaisseur uniforme, tel que par exemple un film ou une feuille en un matériau plastique, tel que du polychlorure de vinyle ou de polyester.

Conformément à une caractéristique de l'invention aboutissant à un mode de réalisation simple et avantageux, le corps creux 2 présente une structure en capuchon, à section circulaire, rectangulaire ou autre, la portion de paroi frontale 4 sensiblement plane formant le fond dudit capuchon étant prolongée par une ou des portion(s) de paroi latérale(s) 6, s'étendant par exemple sensiblement perpendiculairement audit fond.

L'organe sensible 3 est avantageusement isolé électriquement par rapport au corps creux 2, à savoir au moins par rapport à la face interne 4' de la portion de paroi frontale 4 et par rapport à la ou aux portion(s) de paroi latérale(s) 6.

Préférentiellement, l'isolation électrique entre l'organe sensible 3 et la paroi latérale 6 est réalisée par une couche continue d'un matériau électriquement isolant, tel qu'un film ou une feuille en un matériau plastique, par exemple du polychlorure de vinyle ou de polyester, ou encore un revêtement de surface isolant appliqué sur la face interne en regard de la paroi latérale 6 (non spécifiquement représenté sur les figures).

Comme le montrent les figures des dessins annexés, l'organe sensible 3 consiste en une bobine de détection 7 montée sur un corps en ferrite 7' et est calé et maintenu dans ledit corps creux 2, par exemple réalisé en acier inoxydable, par une matière de remplissage 8, telle qu'une résine ou analogue (notamment une résine polyuréthane), cette dernière enrobant entièrement ledit organe sensible 3 à l'exception de sa face 3' tournée vers la portion de paroi 4 définissant la face active.

Ladite résine pourra par exemple être injectée sous pression dans le corps creux.

La présente invention a également pour objet, comme le montrent également les figures annexées, un dispositif capteur ou de détection formé par un boîtier principal 9 présentant un logement 9' ouvert vers l'extérieur et adapté pour la réception d'une tête de mesure ou de détection.

Ce dispositif est caractérisé en ce que ladite tête 1 consiste en une tête de capteur ou de détection telle que décrite ci-dessus, avec un corps creux protecteur 2 en forme de capuchon, ladite tête 1 étant montée, préférentiellement de manière ajustée et avec faculté de démontage, dans ledit logement 9' avec la portion de paroi frontale 4 affleurante par sa face externe active 2'.

Préférentiellement, et pour autoriser un montage amovible de la tête 1 sans nécessiter d'élément de fixation supplémentaire, ladite tête 1 peut être maintenue par sertissage dans le logement correspondant du boîtier principal, une étanchéité latérale périphérique 10 étant présente autour du corps creux 2, entre la ou les paroi(s) latérale(s) 6 de ce dernier et la ou les paroi(s) interne(s) du logement de montage 9' du boîtier principal 9.

Le montage ajusté de la tête 1 dans le logement 9' au niveau de ses parois latérales 6 et son calage en profondeur par butée des bords libres desdites parois 6 sur le fond dudit logement 9' (par exemple au niveau d'un épaulement circulaire précis comme représenté sur les figures) garantira un montage très précis de la tête 1, même en cas de changement ou de remplacement.

De plus, le maintien par sertissage (assurant uniquement un maintien de la tête 1 dans le logement 9', la tête 1 étant déjà calée dans les autres directions) optimise les coûts de fabrication et la maintenance, les pattes de maintien 11 ou analogue du boîtier 9 venant avantageusement en appui sur un bord chanfreiné du corps creux 2, sans dépasser le plan de la face active 2'.

Le sertissage peut être réalisé par des moyens discontinus (pattes) ou par un moyen continu tel qu'un tube replié périphériquement sur le corps 2. Ce dernier et les pattes ou le tube sont avantageusement réalisés en acier inoxydable.

Avantageusement, l'étanchéité périphérique 10 consiste en un joint de compression annulaire, apte à résister à de fortes pressions, notamment supérieures à plusieurs centaines de bars, partiellement logé dans une rainure circonférentielle ménagée dans les parois latérales du logement 9 et fortement comprimé par le corps 2.

Ce joint d'étanchéité peut, par exemple, consister en un joint cylindrique plat (comme le montrent les figures) en fluorocarbone (FKM).

Comme le montrent les figures annexées, le logement 9' comporte une ouverture 9" vers l'intérieur du boîtier principal 9 étanche, ce dernier présentant avantageusement une constitution cylindrique allongée rigide et renfermant des composants additionnels assurant l'alimentation ou l'excitation de l'organe sensible 3 et/ou au moins le prétraitement des signaux délivrés par ce dernier durant les phases de mesure ou de détection consécutives aux phases d'excitation.

Ainsi, l'invention procure une tête de capteur ou de détection dont l'élément ou organe sensible 3, tout en étant protégé efficacement et positionné avec précision dans ladite tête 1, est découplé mécaniquement et structurellement de son enveloppe protectrice 2 au niveau de leurs surfaces en regard ou de leur zone de contact mutuel. De ce fait les contraintes, déformations et chocs affectant la portion de paroi 4 concernée de l'enveloppe sont filtrés ou absorbés avant qu'ils n'atteignent ledit organe sensible 3, ou tout simplement non transmises.

En outre, la constitution modulaire du dispositif capteur ou de détection en facilite la fabrication et la maintenance.

Bien entendu, l'invention n'est pas limitée au mode de réalisation décrit et représenté au dessin annexé. Des modifications restent possibles, notamment du point de vue de la constitution des divers éléments ou par substitution d'équivalents techniques, sans sortir pour autant du domaine de protection de l'invention.

## Revendications

1. Tête de capteur ou de détecteur principalement constituée par une enveloppe de protection formant un corps creux avec une face externe dite face active et par un organe sensible ou de détection monté dans ledit corps creux et adjacent à une portion de paroi frontale de l'enveloppe de protection définissant ladite face active, au niveau de la face interne opposé à cette dernière, tête de capteur (1) **caractérisée en ce que** l'organe sensible (3) est disposé à distance de la face interne (4') de ladite portion de paroi (4) du corps creux (2), de manière à délimiter un espace interstitiel (5) de faible épaisseur (d) formant une interface de découplage mécanique et physique entre ladite portion de paroi (4) et ledit organe sensible (3).

2. Tête de capteur ou de détecteur selon la revendication 1, **caractérisée en ce que** l'espace interstitiel (5) est défini par un ou des élément(s) (5') d'entretoisement ou d'écartement, formé(s) d'un seul tenant sur la face interne (4') ou sur l'organe sensible (3) ou sous forme de pièce(s) intercalaire(s) séparée(s), déterminant le positionnement à distance dudit organe sensible (3) par rapport à ladite face interne (4') de la portion de paroi (4) et préférentiellement situé(s) sur la périphérie dudit espace interstitiel.

3. Tête de capteur ou de détecteur selon l'une quelconque des revendications 1 et 2, **caractérisée en ce que** l'espace interstitiel (5) est vide et forme une lame d'air ou d'un gaz entre la face interne (4') de la portion de paroi (4) et la face en regard de l'organe sensible (3).

4. Tête de capteur ou de détecteur selon l'une quelconque des revendications 1 et 2, **caractérisée en ce que** l'espace interstitiel (5) est au moins partiellement rempli d'une couche intermédiaire (5") en un matériau souple et/ou élastiquement déformable, formant couche intermédiaire de contact entre la portion de paroi (4) et la face en regard de l'organe sensible (3).

5. Tête de capteur ou de détecteur selon la revendication 4, **caractérisée en ce que** la couche intermédiaire (5") présente des propriétés d'amortissement et/ou d'atténuation de chocs et/ou vibrations et relie la face fonctionnelle ou de référence (3') dudit organe sensible (3) à ladite face interne (4') de ladite portion de paroi (4).

6. Tête de capteur ou de détecteur selon l'une quelconque des revendications 4 et 5, **caractérisée en ce que** la couche intermédiaire (5") est composée d'une couche d'une épaisseur minimale (d) déterminée d'un matériau résilient, préférentiellement appliqué par enduction et à propriétés adhésives ou collantes.

7. Tête de capteur ou de détecteur selon l'une quelconque des revendications 4 et 5, **caractérisée en ce que** la couche intermédiaire (5") est composée d'une portion d'un matériau en feuille ou en plaque, par exemple à structure alvéolaire, intimement assemblée avec la face interne (4') de la portion de paroi (4) concernée de l'enveloppe de protection (2), d'une part, et avec la face (3') concernée de l'organe sensible (3), d'autre part, par exemple par collage.

8. Tête de capteur ou de détecteur selon l'une quelconque des revendications 4 à 7, **caractérisée en ce que** la couche intermédiaire (5") remplissant l'espace interstitiel (5) consiste en un film ou une feuille en un matériau électriquement isolant de faible épaisseur uniforme, tel que par exemple un film ou une feuille en un matériau plastique, tel que du polychlorure de vinyle.

9. Tête de capteur ou de détecteur selon l'une quelconque des revendications 1 à 8, **caractérisée en ce que** le corps creux (2) présente une structure en capuchon, à section circulaire, rectangulaire ou autre, la portion de paroi frontale (4) sensiblement plane formant le fond dudit capuchon étant prolongée par une ou des portion(s) de paroi latérale(s) (6), s'étendant par exemple sensiblement perpendiculairement audit fond.

10. Tête de capteur ou de détecteur selon la revendication 9, **caractérisée en ce que** l'organe sensible (3) est isolé électriquement par rapport au corps creux (2), au moins par rapport à la face interne (4') de la portion de paroi frontale (4) et par rapport à la ou aux portion(s) de paroi latérale(s) (6).

11. Tête de capteur ou de détection selon la revendication 10, **caractérisée en ce que** l'isolation électrique entre l'organe sensible (3) et la paroi latérale (6) est réalisée par une couche continue d'un matériau électriquement isolant, tel qu'un film ou une feuille en un matériau plastique, par exemple du polychlorure de vinyle, ou encore un revêtement de surface isolant appliqué sur la face en regard de la paroi latérale (6).

12. Tête de capteur ou de détecteur selon l'une quelconque des revendications 1 à 11, **caractérisée en ce que** l'organe sensible (3) consiste en une bobine de détection (7) montée sur un corps en ferrite (7') et **en ce qu'**il est calé et maintenu dans ledit corps creux (2), par exemple réalisé en acier inoxydable, par une matière de remplissage (8), telle qu'une résine ou analogue, cette dernière enrobant entièrement ledit organe sensible (3) à l'exception de l'espace interstitiel (5).

13. Dispositif capteur ou de détection formé par un boîtier principal présentant un logement ouvert vers l'extérieur et adapté pour la réception d'une tête de mesure ou de détection, dispositif **caractérisé en ce que** ladite tête (1) consiste en une tête de capteur ou de détection selon l'une quelconque des revendications 1 à 12, avec un corps creux (2) en forme de capuchon, ladite tête (1) étant montée, préférentiellement de manière ajustée et avec faculté de démontage, dans ledit logement (9') avec la portion de paroi frontale (4) affleurante par sa face externe active (2').

14. Dispositif selon la revendication 13, **caractérisé en ce que** la tête (1) est maintenue par sertissage dans le logement correspondant du boîtier principal, une étanchéité latérale périphérique (10) étant présente autour du corps creux (2), entre la ou les paroi(s) latérale(s) (6) de ce dernier et la ou les paroi(s) interne(s) du logement de montage (9') du boîtier principal (9).

15. Dispositif selon la revendication 14, **caractérisé en ce que** l'étanchéité périphérique (10) consiste en un joint de compression annulaire, apte à résister à de fortes pressions, notamment supérieures à plusieurs centaines de bars.

16. Dispositif selon l'une quelconque des revendications 13 à 15, **caractérisé en ce que** le logement (9') comporte une ouverture (9") vers l'intérieur du boîtier principal (9) étanche, ce dernier présentant avantageusement une constitution cylindrique allongée rigide et renfermant des composants additionnels assurant l'alimentation ou l'excitation de l'organe sensible (3) et/ou au moins le prétraitement des signaux délivrés par ce dernier durant les phases de mesure ou de détection consécutives aux phases d'excitation.
